# EUROPEAN PATENT APPLICATION

(11) **EP 3 576 351 A1**
(43) Date of publication of application: **04.12.2019**
(21) Application number: 18175140.5
(22) Date of filing: 30.05.2018
(51) Int. Cl.: H04L 12/28, G08B 25/00, H04L 29/08

(54) **NOTIFYING A USER ABOUT THE SAFETY OF A PIECE OF PROPERTY**

(71) Applicant: ABB Schweiz AG, 5400 Baden (CH)
(72) Inventor: DOMOVA, Veronika, 72210 Västerås (SE)
(74) Representative: Kransell & Wennborg KB

(57) **Abstract**

An arrangement for notifying a user about the safety of a piece of property for which the user is responsible, where the property encloses a volume where functions of different safety categories are implemented, comprises a control device (30) having communication interfaces (48, 50) allowing local and global access and configured to obtain sensor signals from sensors (S1, S2, S3, S4) in the volume, combine the sensor signals according to safety category and provide a number of status indications (SIi, SI2, SI3), one for each safety category, via the communication interfaces, where the status indications (SI1, SI2, SI3) represent the safety of the property with respect to safety category. There is also a portable status indicating device (32) having a wireless interface (46) and a user interface (42) and being configured to obtain the status indications (SIi, SI2, SI3) via the wireless interface (46) and display the status of each of the safety categories via the user interface (42).

## Description

### TECHNICAL FIELD

The invention relates to the safety of property. The invention is more particularly concerned with an arrangement, method and computer program product for notifying a user about the safety of a piece of property for which the user is responsible.

### BACKGROUND

Homes are becoming more and more automated. Today there are systems for controlling the atmosphere of rooms, such as ventilation, lights heating and air conditioning. There do also exist advanced security and alarm systems.

These different systems are also now typically controlled or monitored using apps on user terminals.

US 9325516 is as an example concerned with a home automation system where sensors report data to a digital hub. The hub may also be accessed locally or remote via a laptop or phone. However, also local communication such as Bluetooth is possible.

KR 20160051078 is concerned with a web interface for a smart home control system, via which web interface the status of home appliances may be observed.

US 2012/066632 is concerned with a security system for a home application, where users are provided access to a control panel of the system via a remote client for seeing status of automation devices.

Even though smart home technology is becoming more and more commonplace in our everyday lives, the smart home solutions are very heterogeneous forcing the users to have a messy hodgepodge of gizmos installed at their homes and a myriad of mobile apps for controlling them.

One of the common approaches to addressing the heterogeneity issue is to tie standalone smart devices into a single mobile app, essentially turning a smartphone into a universal remote device/control station.

However, those apps often get increasingly bloated. As a result, a new R&D trend can be observed, namely development of solutions that offload universal smart home control into special-purpose, tangible gadgets.

On the market, there are many companies developing solutions in the domain of security and safety. These solutions help to protect homes and their inhabitants by means of video monitors, internet-enabled locks, smart smoke detectors, real-time notifications to police, and more. The solutions are very powerful, e.g. allowing the user to observe the situation at home in real time via video cameras. However, often the users want just to ensure that the situation at home is safe without going into muchdetail, e.g. browsing video from the cameras.

Furthermore, as it was discussed earlier, these solutions are heterogeneous, each coming with its own mobile application for control and monitoring. Even if having a consolidating application, it will take the user a while to navigate through its user interface (UI) till getting the overview of the major safety aspects of the home. This makes it impossible for the user to get an instant overview of the safety situation at home The above-mentioned situations can be summarized in the following way:
- Smart home systems intended for safety are heterogeneous, coming with multiple user interfaces.
- There is no easy way to get an instant overview of the major aspects of the home safety.
- In order to get such an instant overview, the user has to login and browse through the control application(s) of the corresponding smart home technologies on his/her phone. This means, the user should have access to his/her phone every time he/she wants to ensure that their home is safe

It can thereby be seen that there is a need for an improvement in the area, concerning informing of the security of a piece of property.

### SUMMARY

One object of the invention is therefore to provide a more user-friendly informing of the security of a piece of property.

This object is according to a first aspect achieved by an arrangement for notifying a user about the safety of a piece of property for which the user is responsible, said piece of property enclosing a volume in which a number of functions of different safety categories are implemented, the arrangement comprising:
a control device comprising at least one first communication interface allowing local and global access, the control device being configured to obtain sensor signals from sensors in the volume, combine the sensor signals according to safety category and provide a number of status indications based on the combining, one for each safety category, via the communication interface, said status indications representing the safety of the piece of property with respect to the corresponding safety category,
a portable status indicating device comprising a wireless interface and a user interface, the portable status indicating device being configured to obtain the status indications via the wireless interface and display the status of each of the safety categories via the user interface using the status indications.

This object is according to a second aspect achieved through a method for notifying a user about the safety of a piece of property for which the user is responsible, said piece of property enclosing a volume in which a number of functions of different safety categories are implemented, the method being performed by an arrangement comprising a control device having at least one first communication interface allowing local and global access and a portable status indicating device comprising a wireless interface and a user interface and comprising the steps of:
obtaining, in the control device, sensor signals from sensors in the volume, combining the sensor signals according to safety category, and providing, via the communication interface, a number of status indications based on the combining, one for each safety category, the status indications representing the safety of the piece of property with respect to the corresponding safety category,
obtaining, in the portable status indicating device, the status indications via the wireless interface and displaying the status of each of the safety categories via the user interface using the status indications.

The object is according to a third aspect further achieved through a computer program product for notifying a user about the safety of a piece of property for which the user is responsible, said piece of property enclosing a volume in which a number of functions of different safety categories are implemented, the notifying being performed through an arrangement comprising a control device having at least one first communication interface allowing local and global access and a portable status indicating device comprising a wireless interface and a user interface, the computer program product comprising computer program code which when run in a control unit of the control device, causes the control device to:
obtain sensor signals from sensors in the volume, combine the sensor signals according to safety category, and
provide, via the communication interface, a number of status indications, one for each safety category, the status indications representing the safety of the piece of property with respect to the corresponding safety category, and
computer program code which when run in control unit of the status indicating device, causes the status indicating device to:
   obtain the status indications via the wireless interface, and
   display the status of each of the safety categories via the user interface using the status indications.

The wireless interface may be an interface for wireless short-range communication.

The invention according to the above-mentioned aspects has a number of advantages. It informs a user about the safety of the piece of property in a simple, fast way with a good overview without an excessive amount of information. The responsible user can also get the information of the safety at any time. The invention provides a bridge between users' emotional human needs to ensure that their piece of property is safe and the digital technologies installed in the volume. A user does also not need to be technology proficient.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a room where a number of functions according to different safety categories are being performed under the control of a control device,
fig. 2 schematically shows a first realization of a portable status indicating device for communicating with the control device,
fig. 3 schematically shows a second realization of the portable status indicating device,
fig. 4 schematically shows different units of a control device and a portable status indicating device that are communicating directly with each other,
fig. 5 schematically shows the portable status indicating device communicating with the control device via a user terminal and a communication network,
fig. 6 shows a flow chart of a number of steps in a method of notifying a user about the safety of piece of property, which steps are being performed in the control device,
fig. 7 shows a flow chart of a number of further steps in the method of notifying a user about the safety of the piece of property, which steps are being performed in the portable status indicating device,
fig. 8 shows a flow chart of a number of steps for notifying the user about the safety of the piece of property with regard to one safety category, and
fig. 9 shows a computer program product in the form of a CD ROM disc with computer programs performing the functionality of control units of the arrangement.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards the safety of a piece of property enclosing a volume in which a number of functions of different safety categories are being performed. The piece of property may as an example be a house or a part of a house such as an apartment. Another example of a piece of property is a vessel such as a boat or a vehicle. A function may be a function the operation of which may be related to the hazard or risk of water damage to the property, such as a water providing or drainage function, a function related to the hazard or risk of fire, such as a home appliance operation function or a fire and/or smoke detection function, or a function that relates to the hazard or risk of intrusion into the volume such as one or a more of locking functions or lock surveillance functions. The functions may therefore be categorised into different safety categories, such as a water hazard category, a fire hazard category and intrusion hazard category. The invention is also concerned with notifying a user responsible for the piece of property about the safety of it, where this user may own or rent the piece of property. He or she may also be a supervisor or caretaker of the piece of property.

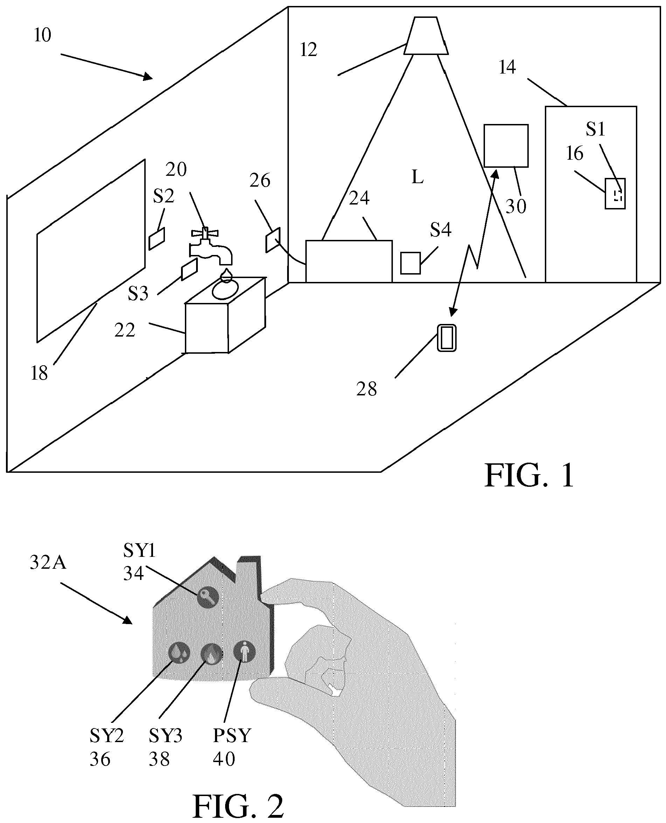

Fig. 1 shows one example of such a volume in the form of a room 10, which room may be the room of a house or an apartment. It should be realized that although only one room is shown and being discussed, the principles being described in the following may be applied on all rooms in such a house or apartment. In the room 10 there are objects such as a light source 12, a door 14 with a lock 16, a window 18, a water faucet 20 over a sink 22 and a home appliance 24 connected to an electrical outlet 26, where the home appliance may be an electrical kettle, an oven, a stove or some other electrically operated device. There are also a number of sensors monitoring the functionality. There is a first sensor S1 in the lock 16 detecting if the door 14 is locked or unlocked, there is a second sensor S2 at the window 18 detecting if it is opened or closed, there is a third sensor S3 at the faucet 20 detecting if it is open or closed and finally there is a fourth sensor S4 detecting if the home appliance 24 is on or operating as opposed to being off or in a standby state. It should here be realized that the sensors shown and described so far are mere examples of different types of sensors. There may exist further types, such as smoke and fire detectors. There may also exist more sensors of the same type.

There is furthermore a control device 30 in the room 10, which control device 30 is connected to the sensors (not shown) provided via the control device 30. Thereby a user can get information about the status of the various functions, for instance via a user interface such as a display (not shown). The control device may also control different functions in the different safety categories. It is in this regard therefore also possible that the user may influence the functions via the control device 30. He or she may for instance lock an unlocked door or close the valve of a faucet or turn off a home appliance.

In the figure there is also shown a portable user terminal 28 in the form of a mobile phone, which portable user terminal is seen as communicating wirelessly with the control device. The communication is with advantage performed using wireless short-range communication such as Bluetooth, for instance Bluetooth Low Energy (BLE). However, also WiFi, i.e. IEEE 802.11, is an option. Other possible alternatives are Near Field Communication (NFC) or Radio-Frequency IDentification (RFID). However, also regular mobile communication is possible.

In order to notify a user about the safety of the piece of property, there is provided a portable status indicating device. This device has been omitted from fig. 1.

The control device and portable status indicating device together form an arrangement for notifying a user about the security of the piece of property.

Fig. 2 schematically shows one possible realization of such a portable status indicating device 32A as an ergonomic keychain shaped as a house. The portable status indicating device 32A comprises at least one user interface via which symbols of the different safety categories are used to display a status of each of the categories to a user that may be a user responsible for the piece of property. In the figure there are three such symbols being displayed; a first symbol SY134 for the intrusion hazard category, a second symbol SY2 36 for the water hazard category and a third symbol SY3 38 for the fire hazard category. In the figure there is also an optional presence symbol PSY 40 used for indicating the presence of one or more users in or around the volume.

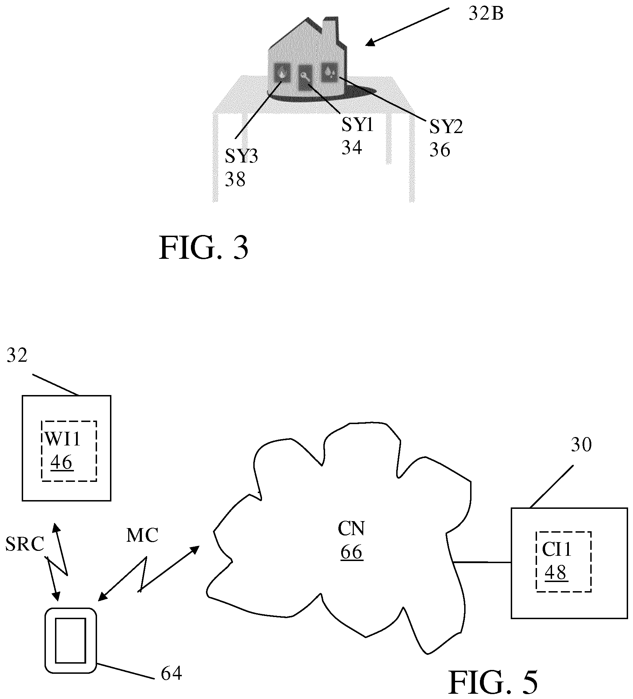

Fig. 3 shows a second realization of the portable status indicating device 32B in the form of an ergonomic table-top object shaped as a house. It can be seen that in this second realization there is also at least one user interface via which symbols are displayed to a responsible user. In the figure the same three symbols SY1 34, SY2 36 and SY3 38 are displayed. However, in this case there is no presence symbol.

There are a number of ways in which the symbols may be presented to the user. They may be provided as a structure in the surface of the portable status indicating device being illuminated with different colours by light emitting diodes (LEDs). A display, for instance a liquid crystal display (LCD), displaying the symbols may also be used.

In order to power these and other parts of the portable status indicating device, the portable status indicating device may be equipped with a battery, which battery may be a rechargeable battery. It may as an example be a battery that may be wirelessly recharged. It is as an alternative or additionally possible that the battery is rechargeable using for instance a Universal Serial Bus (USB) connection.

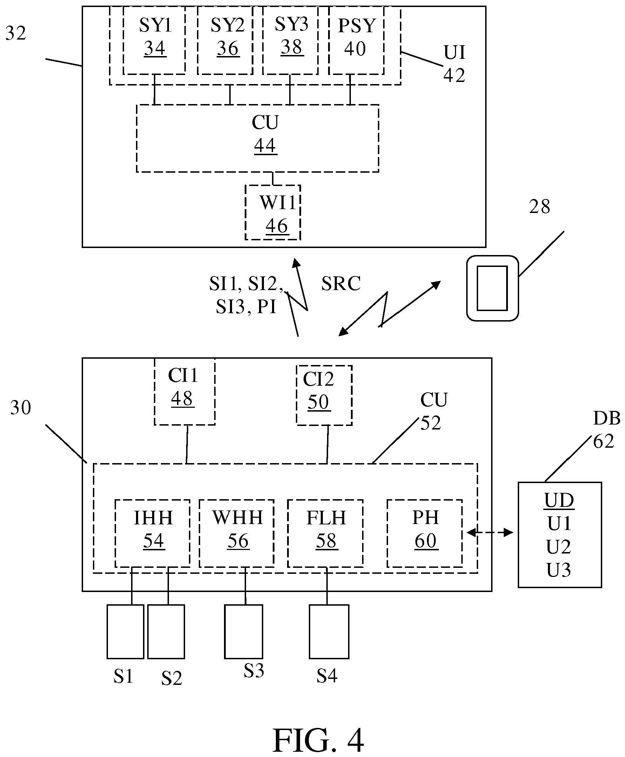

Fig. 4 shows a block schematic of the portable status indicating device 32 and the control device 30 as they are communicating directly with each other using short-range communication (SRC).

The portable status indicating device 32 comprises a first wireless interface WI1 46 connected to a control unit CU 44, which control unit CU 44 in turn is connected to a user interface UI 42 via which the previously discussed symbols SY1 34, SY2 36, SY3 38 and PSY 40 are being displayed. The first wireless interface WI1 46 is a wireless short-range communication interface of any of the previously described types such as Bluetooth. As an alternative it is possible that the interface is a mobile communication interface, such as interface for communication with a 5G mobile communication network. The control unit 44 may be realized through a processor with associated program memory or a microcontroller board.

The control device 30 in turn comprises at least one interface allowing local and global access. In this example it comprises two communication interfaces; a first global communication interface CI1 48 for global access and a second local communication interface CI2 50 for local wireless access, where the global interface may be an Application Programming Interface (API) that may be reached via a Uniform Resource Locator (URL), an Internet Protocol (IP) address or some similar communication means, while the second communication interface 50 is a wireless interface that may be of the same type as the first wireless interface 46 used by the portable status indicating device 32, although this is no strict requirement. It may thus also be a wireless short-range communication interface.

The communication interfaces 48 and 50 are also connected to a control unit CU 52, which may likewise be realized as a processor with associated program memory. The control unit 52 is connected to the sensors Si, S2, S3 and S4 in order to handle data from these different sensors with regard to the different safety categories. For this reason, there is an Intrusion Hazard Handing block IHH 54, a Water Hazard Handling block WHH 56 and a Fire Hazard Handling block FLH 58, where signals from the first and second sensors S1 and S2 are provided to the intrusion hazard handling block 54, signals from the third sensor S3 is provided to the water hazard handling block 56 and signals from the fourth sensor S4 are provided to the fire hazard handling block 58. There is also a presence handling block PH 60, which handles the presence of one or more users of the volume. For this reason, the presence handling block 60 communicates with an optional database DB 62 comprising user data UD with settings relating to different users U1, U2, U3 of the piece of property. These settings may comprise information about different degrees of responsibility of the users in relation to the volume, such as if a user is an adult in charge of or responsible for the piece of property, a user that has limited responsibility for the piece of property, such as another adult, or a user without responsibility, such as a child. As can be seen also the portable user terminal 28 of fig. 1 is shown as communication with the second communication interface 50. This user terminal 28 may be associated with one of the user with limited or no responsibility, as an example the second or third users U2 or U3. This communication of the user terminal 28 with the communication interface 50 is reported to the presence handling block 60, which is thereby informed that the user of the user terminal 28 is present in or adjacent the volume.

In fig. 4, the intrusion hazard handling block 54, water hazard handling block 56, fire hazard handling block 58 and presence handling block 60 are shown as being a part of and thereby implemented in the control unit 52. It should be realized that these blocks may be provided "in the cloud" i.e. on one or more external servers of a data centre and with which the control device 30 communicates, for instance via the first communication interface 48. It should be realized that also the database 62 may be provided in such a location. However, the database 62 may also be provided locally at or in the volume.

In fig. 4 the portable status indicating device 32 is shown as communicating directly with the control device 30 using short-range communication. It should be realized that the communication may just as well be indirect via a mobile communication network or via a user terminal and a mobile communication network.

Fig. 5 schematically shows one example of such an indirect communication. The first wireless interface 46 of the portable status indicating device 32 is here communicating wirelessly with another user terminal 64 using short range communication, which other user terminal 64 may be a mobile phone of a responsible user, for instance the first user Ui. This user terminal 64 then communicates wirelessly with a communication network CN 66, for instance via a mobile communication (MC) link, in order to connect to the first communication interface 48 of the control device 30.

As was mentioned earlier, a user, for instance the first user U1, that is responsible for the piece of property enclosing a volume where there are functions with possible hazards may want to be able to obtain a quick overview of the status of the piece of property in relation to different hazard categories.

A user responsible for a piece of property may thus be interested in seeing the status with regard to security of the property for different security categories.

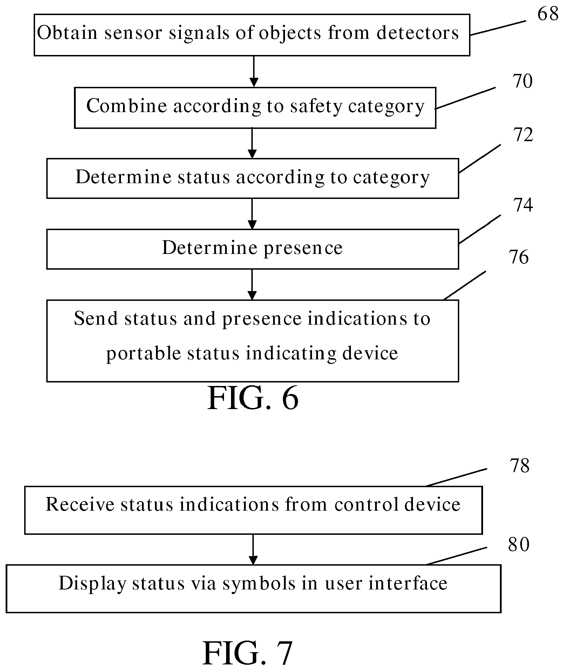

The functioning of the arrangement will now be described with reference being made also to fig. 6 and 7, where fig. 6 shows a flow chart of a number of steps in a method of notifying a user about the safety of a piece of property being performed in the control device and to fig. 7, which shows a flow chart of a number of further steps in the method of notifying a user about the safety of the piece of property being performed in the portable status indicating device.

The different blocks 54, 56 and 58 obtain sensor signals of monitored objects from the sensors, step 68. The sensor signals are here separated from each other based on safety categories, which means that the intrusion hazard handling block 54 receives sensor signals of the intrusion hazard category from corresponding sensors, such as sensor signals indicating that doors are being locked/unlocked or windows being opened/closed. If the volume comprises motion sensors it is in this case also possible that motion sensor data is submitted. As an example, the intrusion hazard handling block 54 receives sensor data from the first sensor S1 in the lock 16 of the door 14 and from the second sensor S2 that detects if the window 18 is open. In the same way the water hazard handling block 56 receives sensor data from sensors sensing water flow, such as sensors in tubes or pipes, drainage and faucets, like the third sensor S3 that senses water flow through the faucet 20. Also, the fire hazard handling block 58 receives sensor data from sensors in the fire hazard category, such as data from smoke and fire detectors and sensor data related to home appliances such as the fourth sensor S4 monitoring the appliance 24.

The sensor data is then combined according to category in each of the different blocks, step 70. The intrusion hazard handling unit 54, water hazard handling block 56 and fire hazard handling block 58 thus combine their respective sensor signals according to corresponding combining schemes and determine a status of the safety of the category based on the combination, step 72. The intrusion hazard handling block 54 thus determines the status of the intrusion hazard category based on the combination of the sensor signals of the intrusion hazard category. The water hazard handling block 56 determines the status of the water hazard category based on the combination of sensor signals in the water hazard category and the fire hazard handling block 58 determines the status of the fire hazard category based on the combination of sensor signals in the fire hazard category. The blocks 54, 56 and 58 more particularly each provide a status indication SI1, SI2 and SI3 representing the determined status.

It is here possible that at least two different safety levels are possible in the different categories where a first safety level is safe and a second is unsafe. However, it is also possible with one or more levels in-between, such as potentially safe or potentially unsafe. A status indication may thus occupy one of a number of safety levels comprising a first safe safety level representing a safe state and a second safety level representing an unsafe state,

The sensor signals may be binary indicating on/off, safe/unsafe etc. of the monitored functionality and the combining may be based on summing the binary signals, an on or unsafe state may then have a high signal level and an off or safe state a low signal level, such as a zero level. In one combining scheme the combining of sensor signals is such that if one sensor signal indicates that the corresponding monitored function is unsafe, then an unsafe safety level is indicated for the category. This may be the case if for instance a lock or a window is open or a smoke detector is active. In this case the combination is an "or"-type of combination of the sensor signals. In another combining scheme it is possible that a number of sensor signals have to indicate that a corresponding function is on or unsafe for an unsafe level to be indicated. The combination, such as a sum of signals, may thus have to exceed a threshold in order for a corresponding safety category level to be indicated. Another possibility is that different sensor signals are given different weights. A smoke detector signal may have a higher weight than a home appliance on signal. A sensor signal representing an on/off state of a monitored device, such as a faucet or home appliance being on, may have a dependency on the time it has had the on or off state before being allowed to be used in the combination. A water flow may for instance only be used in the combination if it has been on longer than a corresponding time duration threshold. The same type of consideration may be made for a home appliance such as a stove.

Here it may also be mentioned that the presence handling block 60 may determine the presence of users in or adjacent the volume based on the detection of the corresponding user terminals associated with the users being in contact with the control device 30 and more particularly being in contact with the second commination interface 50 of the control device 30. The presence handling block 60 may make a presence setting for each user that is detected to be in or adjacent the volume. The presence settings may then be combined into a presence indication PI informing about a presence status, step 74. The determination of the status of the presence indication may involve investigating the different settings for the users in the database 62.

It is also possible that different presence status levels are indicated, where one level may be that a responsible user is present, another that a user with limited responsibility is present, a third that a non-responsible user is present and a fourth that no user is present.

Once the different indications SI1, SI2, SI3 and PI have been determined, they are then transferred or sent from the different blocks 54, 56, 58 and 60 associated with the control unit 52 to the portable status indicating device 32, step 76, where they may be transferred directly between the second communication interface 50 of the control device 30 and the first wireless interface 46 of the portable status indicating device 32 or from the first communication interface 48 of the control device 30 to the first wireless interface 46 of the portable status indicating device 32 via the user terminal 64 of the responsible user U1.

The control unit 44 of the portable status indicating device 32 thus receives the indications from the control device 30 via the first wireless interface 46, step 78, and then displays the status of the indications via the corresponding symbols SY1 34, SY2 36, SY3 38 and optionally also PSY 40 in the user interface 42, step 80. In this way the responsible user U1 is informed about the status of the categories in a simple, fast easily overviewed way and without excessive information.

In the example given above, the blocks formed the status signals for the different categories solely based on sensor signals from the sensors. It should here be realized that it is possible to also have the presence indicator influence the status signals of one or more of the categories, irrespective of if the status with regard to the presence of users is displayed or not.

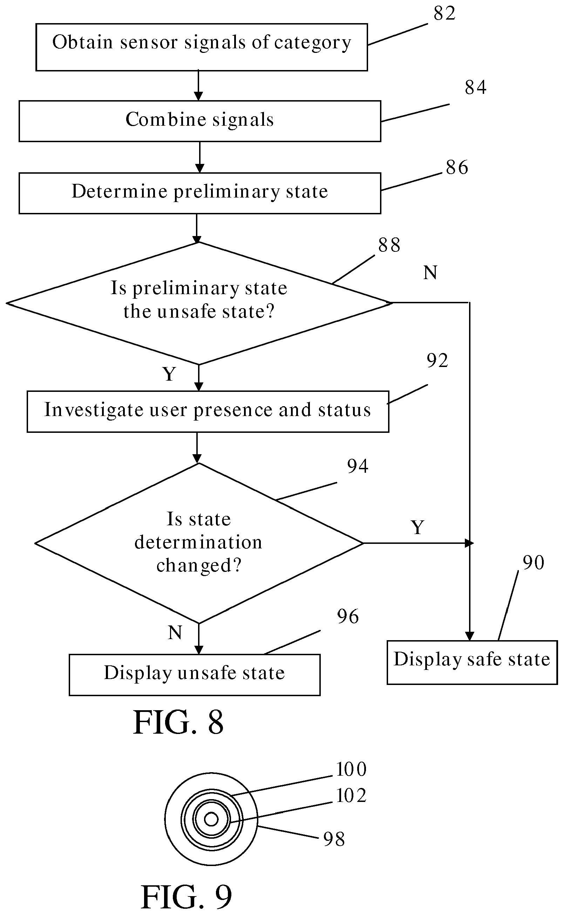

One example of this will now be described with reference also being made to fig. 8, which shows a flow chart of a number of steps for notifying the responsible user U1 about the safety of the piece of property with regard to a certain safety category, for instance the fire hazard category. For simplicity, it is here also presumed that there are only two states; a safe state and an unsafe state.

As before, the sensor handling block in question, in the example the fire hazard handling block 58, receives the sensor signals of the category from the sensors S4, step 82. It then combines the signals, step 84, and thereafter determines a preliminary state, step 86, which is done through investigating the combination, such as comparing the combination result with a corresponding threshold and indicating a state such as safe or unsafe based on if the combination result crosses the threshold, i.e. rises above or falls below the threshold. The block 58 more particularly investigates if the preliminary determined state is the unsafe state or not. If it is not, step 88, i.e. if the state is the safe state, then the block 58 proceeds and makes the preliminary state into an official state and determines that the safe state is to be displayed, step 90.

If however the preliminary state is the unsafe state, step 88, then the presence and status of users is investigated, step 92. The sensor handling block 58 therefore connects to the presence handling block 60, which, as was mentioned earlier has determined if any users associated with the volume are present in or around the volume. This determination may involve detecting if any user terminal linked to users in the database 62 are connected to the control device 30 via the second communication interface 50. The presence handling block 60 then investigates which settings exist for such identified users in the database 62, such as the degree of responsibility, like if an identified user is the user U1 responsible for the piece of property, another adult U2 or a child U3.

The presence handling block 60 then sends information about if any user is present and also the responsibility setting of such users to the sensor handling block 58 in order to let the block 58 employ the presence determination in the combining of sensor signals.

The sensor handling block 58 then investigates if the preliminary state would be influenced by the user presence and status investigation, and if not, step 94, the preliminary state, which in this case was the unsafe state, is confirmed and made into an official unsafe state that is to be displayed, step 96. However, in case the state determination changed, step 94, then this new state, which is the safe state, is made into the official state that is to be displayed, step 90. The sensor handling block 58 in this way considers the degree of responsibility of the users determined to be present at the volume in the combining.

There are a number of situations that can lead to different results of changed state. Take the example of a home appliance. An electric kettle may for instance lead to a display of an unsafe state if no user is in the volume, but to a safe state in case any other user is in the volume. However, an oven being on may lead to the unsafe state being confirmed if a child is in the volume but not if an adult is there. It can thereby be seen that it is possible to disregard the state of at least one sensor signal if at least one user is deemed to be present in or around the volume. In other scenarios an unsafe state may always occur for a certain sensor signal unless the responsible user is in or around the volume. The presence of other sensor signals may always lead to the presentation of an unsafe state, such as a fire alarm.

It is in this way possible to adapt the generation of different states to which users are present in the volume.

The invention has a number of advantages. The portable status indicating device replaces the necessity to check on the variety of mobile applications users employ daily to control their smart homes when being on a distance from the home. The responsible user can get an overview of the safety situation at home at any time, e.g. every time when leaving the home the user can ensure that everything is locked/switched off. This is also done in a simple way providing a good overview without an excessive amount of information. Moreover, the portable status indicating device provides a bridge between users' emotional human needs to ensure that their home is safe and the digital technologies installed in the homes. In this solution, humans' desire for simple systems and technological advancement meets together, also new audiences - who cannot cope with too complicated modern technologies - can be engaged.

The statuses of the home safety aspects are calculated based on the sensor data installed in the home, e.g. presence sensors, humidity sensors, smoke sensors, smart locks, etc. An advanced version of the system can be based on Artificial Intelligence which will correlate the data from the sensors, also the time schedules of the inhabitants. Alternatively, the user can identify custom rules when and which status should be depicted.

The main approach to the visualization is simplicity, i.e. to deliver the information in as short form as possible. The proposed approach is to use icons and color. Icons, i.e. shapes, corresponding to the aspects, e.g. a water drop to represent water leakage, a door or window icon to represent locked doors/windows, a human for represent human presence at home, a fire to depict switched on electrical appliances or fire/smoke alarms. The color can represent the status of the aspect, i.e. green: ok, yellow: trouble, red: danger, etc.

It can be seen that the use of a presence indication in the determination of statuses of the different categories provides further benefits. In this way it is possible to eliminate a number of unnecessary alarm states to be generated. It is also possible to improve on the display of a state. If for instance an unsafe state is indicated together with a presence indication of an adult being present, the responsible users may be clearly made aware of a potential hazard.

The initial configuration (e.g. configuring connectivity) can be done through a mobile application. Once configured, the device does not need much configuration or interaction through the user interface.

As was mentioned earlier, the control units of the control device and the portable status indicating device may be provided in the form of processors with associated program memory including computer program code for performing its functionality. Such a control unit may also be provided in the form of a digital signal processor (DSP) or Application Specific Integrated Circuit (ASIC) or Field-Programmable Gate Array (FPGA).

A computer program may also be a computer program product, for instance in the form of a computer readable storage medium or data carrier, like a CD ROM disc or a memory stick, carrying such a computer program with the computer program code, which will implement the functionality of the above-described control unit when being loaded into a processor. One such computer program product in the form of a CD ROM disc 98 with the above-mentioned computer program code 100 for the control device and computer program code 102 for portable status indicating device is schematically shown in fig. 9.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. An arrangement for notifying a user about the safety of a piece of property for which the user is responsible, said piece of property enclosing a volume (10) in which a number of functions of different safety categories are implemented, the arrangement comprising:
a control device (30) comprising at least one first communication interface (48, 50) allowing local and global access, the control device (30) being configured to obtain sensor signals from sensors in the volume, combine the sensor signals according to safety category and provide a number of status indications (SI1, SI2, SI3) based on the combining, one for each safety category, via the communication interface, said status indications (SIi, SI2, SI3) representing the safety of the piece of property with respect to the corresponding safety category,
a portable status indicating device (32, 32A, 32B) comprising a wireless interface (46) and a user interface (42), said portable status indicating device being configured to obtain said status indications (SIi, SI2, SI3) via the wireless interface (46) and display the status of each of the safety categories via the user interface (42) using the status indications.

2. The arrangement according to claim 1, wherein a status indication can occupy one of a number of safety levels comprising a first safe safety level representing a safe state and a second safety level representing an unsafe state, where the control device (30) when combining the sensor signals is configured to form a status indication having an unsafe safety level if any of the sensor signals of the category represents an unsafe state.

3. The arrangement according to claim 1, wherein the control device (30) when combining the sensor signals is configured to add the sensor signals of a category to each other for forming a sum, compare the sum with a corresponding threshold and indicate a safety level if the combination result crosses the threshold.

4. The arrangement according to any previous claim, wherein at least one sensor signal of a category is a signal representing an object (20, 24) in the volume (10) having a state of being turned on and the control device (30) is further configured to compare the time for which the sensor signal has had the on state with a time threshold and only use the sensor signal in the combining if the time threshold is exceeded.

5. The arrangement according to any previous claim, wherein the control device (30) is further configured to determine the presence of users of the volume.

6. The arrangement according to claim 5, wherein the control device (30) is further configured to provide a presence indication (PI) and provide, via the at least one interface (48), a presence indication (PI) representing the status of the presence of said users at the volume based on the presence determination and the portable status indicating device (32) is configured to obtain said presence indication via the wireless interface (46) and display the status of the presence indication via the user interface.

7. The arrangement according to claim 5 or 6, wherein the control device comprises a first global interface (48) and a second local interface (50) and is configured to determine the presence of users through detecting that user terminals (28, 64) associated with the users are in contact with the second local interface (50).

8. The arrangement according to any of claims 5 - 7, wherein the control device (30) is further configured to employ said presence determination in the combining of sensor signals.

9. The arrangement according to claim 8, wherein the users have different degrees of responsibility and the control device (30) is configured to consider the degree of responsibility of the users determined to be present at the volume in the combining.

10. The arrangement according to claim 9, wherein the control device (30) when combining is configured to disregard the state of at least one sensor signal if at least one user is deemed to be present at the volume.

11. A method for notifying a user about the safety of a piece of property for which the user is responsible, said piece of property enclosing a volume (10) in which a number of functions of different safety categories are implemented, the method being performed by an arrangement comprising a control device (30) having at least one first communication interface (48, 50) allowing local and global access and a portable status indicating device (32, 32A, 32B) comprising a wireless interface (46) and a user interface (42) and comprising the steps of:
obtaining (68), in the control device (30), sensor signals from sensors (S1, S2, S3, S4) in the volume (10),
combining (70) the sensor signals according to safety category, and providing (76), via the communication interface (48, 50), a number of status indications (SIi, SI2, SI3) based on the combining, one for each safety category, said status indications representing the safety of the piece of property with respect to the corresponding safety category, obtaining (78), in the portable status indicating device (32), said status indications (SIi, SI2, SI3) via the wireless interface (46) and displaying (80) the status of each of the safety categories via the user interface (42) using the status indications.

12. The method according to claim 11, further comprising determining the presence of users of the volume and providing a presence indication (PI) together with the status indications (SIi, SI2, SI3), said presence indication being based on said determining and representing the status of the presence of said users at the volume.

13. The method according to claim 12, wherein the control device (30) comprises a first global interface (48) and a second local interface (50) and the determining of presence of users is made through detecting that user terminals (28, 64) associated with the users are in contact with the second local interface.

14. The method according to claims 13, wherein said presence determination is employed in the combining of sensor signals.

15. A computer program product (98) for notifying a user about the safety of a piece of property for which the user is responsible, said piece of property enclosing a volume (10) in which a number of functions of different safety categories are implemented, the notifying being performed through an arrangement comprising a control device (30) having at least one first communication interface (48, 50) allowing local and global access and a portable status indicating device (32, 32A, 32B) comprising a wireless interface (46) and a user interface (42), the computer program product comprising computer program code (100) which when run in a control unit (52) of the control device (30), causes the control device (30) to:
obtain sensor signals from sensors in the volume,
combine the sensor signals according to safety category, and
provide, via the communication interface (48; 50), a number of status indications (S1, S2, S3), one for each safety category, said status indications representing the safety of the piece of property with respect to the corresponding safety category, and
computer program code (102) which when run in control unit (44) of the status indicating device (32), causes the status indicating device (30) to:
obtain said status indications via the wireless interface (46), and
display the status of each of the safety categories via the user interface (42) using the status indications.
